# EUROPEAN PATENT APPLICATION

(11) **EP 4 213 021 A1**
(43) Date of publication of application: **19.07.2023**
(21) Application number: 23152024.8
(22) Date of filing: 17.01.2023
(51) Int. Cl.: G06F 9/50, G06F 9/448

(54) **ELECTRONIC SYSTEM, OPERATING METHOD THEREOF, AND OPERATING METHOD OF MEMORY DEVICE**

(30) Priority: 17.01.2022 KR 20220006723
(71) Applicant: Samsung Electronics Co., Ltd., Gyeonggi-do 16677 (KR)
(72) Inventor: YANG, Seung Jun, 16677 Suwon-si (KR); YI, Hye Joon, 16677 Suwon-si (KR); CHO, Mi Jung, 16677 Suwon-si (KR)
(74) Representative: Marks & Clerk LLP

(57) **Abstract**

Provided are an electronic system of a real-time operating system, an operating method thereof, and an operating method for a memory device. The operating method comprising obtaining a call graph by performing static code analysis on at least one thread that corresponds to a task, obtaining a stack usage of the thread and a call probability for each node by performing runtime profiling of the call graph, allocating a threshold value of a stack size for a first memory area by taking into account the call graph, the call probability for each node, and the stack usage, expanding and storing a stack from the first memory area to a second memory area according to a comparison result between the threshold value and a stack usage of the first memory area and returning the stack to the first memory when execution is completed in the second memory area, wherein the electronic system comprises a memory device configured to include the first memory area and the second memory area.

## Description

### BACKGROUND

### 1. Technical Field

The present disclosure relates to an electronic system of a real-time operating system, an operating method thereof, and an operating method for a memory device.

### 2. Description of the Related Art

Solid state drives (SSDs) are gradually emerging from the personal user market, such as laptop computers and smartphones, into other markets, such as large-scale data centers and high-performance enterprises. At the same time, their functional requirements thereof as applied to individual products, are becoming more diverse and complex. Real-time operating system (RTOS) may be applied to storage devices in an effort to perform product development and maintenance faster and more smoothly while satisfying varied and complex requirements. The storage device may reduce the burden on a developer by separating complex requirements into individual threads and delegating scheduling overhead to an RTOS kernel.

However, in order to more efficiently utilize the RTOS, a separate stack must be allocated to each thread. Each time a thread executes code, a stack frame is stacked on an individual function of a stack allocated to the thread, and thus the performance of the thread is directly affected depending on where the stack allocated to the thread is located in a memory layer of a system.

System developers may place a stack in a high-performance memory to more efficiently process threads, however in embedded systems in which SSDs belong, high-performance memory is so limited that stack overflow is likely to occur.

### SUMMARY OF THE INVENTION

Aspects of the present disclosure provide an electronic system for efficient thread management in a real-time operating system (RTOS) under resource constraints, and an operating method thereof.

Aspects of the present disclosure also provide an electronic system in which efficiency of resource utilization is improved, performance is improved, and stack overflow does not occur in an RTOS, and an operating method thereof.

However, aspects of the present disclosure are not restricted to those set forth herein. The above and other aspects of the present disclosure will become more apparent to one of ordinary skill in the art to which the present disclosure pertains by referencing the detailed description of the present disclosure as given below.

According to an aspect of the present disclosure, there is provided an electronic system in a real-time operating system, the operating method comprises getting a call graph by performing static code analysis on at least one thread that corresponds to a task, getting a stack usage of the thread and a call probability for each node by performing runtime profiling of the call graph, allocating a threshold value of a stack size for a first memory area by taking into account the call graph, the call probability for each node, and the stack usage, expanding and storing a stack from the first memory area to a second memory area according to a comparison result between the threshold value and a stack usage of the first memory area and returning the stack to the first memory when execution is completed in the second memory area, wherein the electronic system comprises a memory device configured to include the first memory area and the second memory area.

According to another aspect of the present disclosure, there is provided an electronic system comprising a real-time operating system (RTOS) module configured to process a command from a host by dividing the command into at least one thread, a call graph module configured to get a call graph by performing static code analysis on the thread, a runtime profiler configured to get a stack usage of each node and a call probability for each node by performing runtime profiling of the call graph and a memory device configured to include a first memory area and a second memory area, wherein the RTOS module is configured to allocate a stack space that corresponds to the thread to the first memory area on the basis of a threshold value based on the stack usage of each node and the call probability for each node, store a stack corresponding to the thread in the allocated stack space in the first memory area, and connect and store a subsequent stack to the second memory area, in response to an overflow alarm based on the call probability for each node and the stack usage of each node being generated.

According to other aspect of the present disclosure, there is provided an operating method of a memory device in a real-time operating system, the memory device comprising a first memory area and a second memory area, the operating method comprises compiling a task into multiple threads and exploring a call graph by static code analysis on each thread, getting a stack usage of each node and a call probability for each node by performing dynamic code analysis on the explored call graph, setting a stack size of the first memory area based on the dynamic code analysis result, storing stack frames corresponding to the thread in sequence in the first memory area and storing a subsequent stack frame in the second memory area in response to an overflow alarm for the first memory area being generated.

It should be noted that the effects of the present disclosure are not limited to those described above, and other effects of the present disclosure will be apparent from the following description.

At least some of the above and other features of the invention are set out in the claims.

### BRIEF DESCRIPTION OF THE DRAWINGS

The above and other aspects and features of the present disclosure will become more apparent by describing in detail example embodiments thereof with reference to the attached drawings, in which:
FIG. 1 is a block diagram illustrating an electronic system according to some embodiments of the present disclosure.
FIG. 2 is a block diagram illustrating an electronic system according to some embodiments of the present disclosure.
FIG. 3 is a block diagram illustrating a storage controller 20 according to some embodiments.
FIG. 4 is a block diagram illustrating in more detail a memory 100 included in the storage controller 20.
FIG. 5 is a diagram for describing stack overflow occurring in the memory 100.
FIGS. 6 and 7 are call graphs of a thread according to some embodiments.
FIG. 8 is a conceptual diagram illustrating first and second memory areas for describing an operating method of an electronic system according to some embodiments.
FIG. 9 is a conceptual diagram for describing the electronic system operating by expanding from the first memory area to the second memory area according to some embodiments.
FIG. 10 is a conceptual diagram for describing the electronic system operating by expanding from the first memory area to the second memory area according to some embodiments.
FIG. 11 is a conceptual diagram for describing the electronic system operating by expanding from the first memory area to the second memory area according to some embodiments.
FIG. 12 is a flowchart illustrating an operating method of an electronic system according to some embodiments.
FIG. 13 is a diagram illustrating a system to which a storage device according to one embodiment is applied.
FIG. 14 is a diagram illustrating a data center to which a memory device according to some embodiments is applied.

### DETAILED DESCRIPTION OF THE PREFERRED EMBODIMENTS

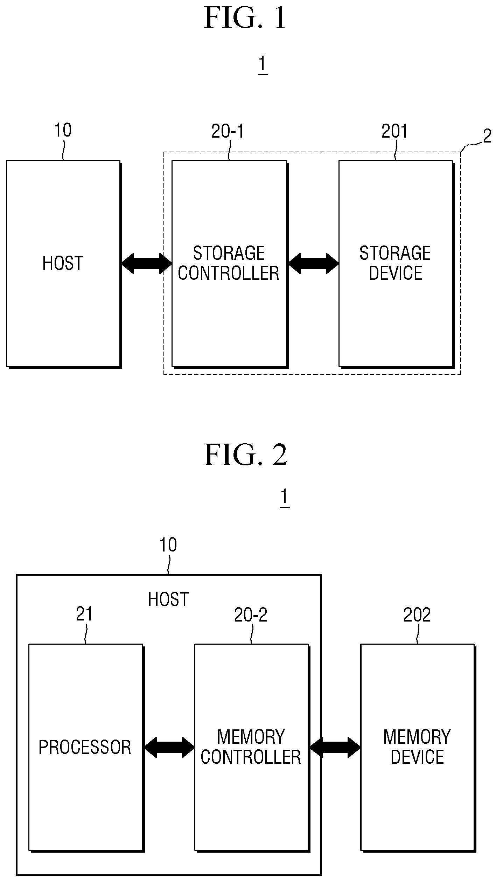

Hereinafter, an electronic system according to some embodiments of the present disclosure will be described with reference to FIGS. 1 to 14.

FIG. 1 is a block diagram illustrating an electronic system according to some embodiments of the present disclosure.

An electronic system 1 may include a host 10 and a storage system 2. The storage system may include a storage controller 20-1 and at least one storage device 201.

In some embodiments, the host 10 may be a computing device such as a personal computer, a server, a notebook computer, a tablet computer, a smartphone, or a cellular phone, but the present disclosure is not limited thereto.

The host 10 may communicate with a memory system by using an interface protocol, such as peripheral component interconnect-express (PCI-E), advanced technology attachment (ATA), serial ATA (SATA), parallel ATA (PATA), serial attached SCSI (SAS), or compute eXpress link (CXL). The interface protocols between the host 10 and the storage system 2 are not limited to the examples listed above, and the interface protocol used may be one of other interface protocols, such as universal serial bus (USB), multi-media card (MMC), enhanced small disk interface (ESDI), or integrated drive electronics (IDE).

According to some embodiments, each of the at least one storage device 201 may be a non-volatile memory (NVM) device, such as a flash memory, a magnetoresistive random access memory (MRAM), a phase-charge random access memory (PRAM), a ferroelectric random access memory (FeRAM), or the like.

FIG. 2 is a block diagram illustrating an electronic system according to some embodiments of the present disclosure.

Referring to FIG. 2, an electronic system 1 may include a host 10 and a memory device 202. The host 10 may include a processor 11 and a memory controller 20-1, and the memory controller 20-1 may be connected to a separate external memory device 202. The processor 11 may control the overall operation of the electronic system, and may control, for example, operations of other components included in the electronic system. The processor 11 may be implemented as a general-purpose processor, or as another processor such as a dedicated purpose processor or an application processor (AP).

The processor 11 may include one or more central processing unit (CPU) cores, and the memory controller 20-2 may be connected to at least one external memory device 202 to control the external memory device 202. According to some embodiments, the processor 11 may be an accelerator block, such as a dedicated circuit configured to perform high-speed data computation, such as artificial intelligence (AI) data computation. For example, an accelerator block may be implemented as a graphics processing unit (GPU), a neural processing unit (NPU) and/or a data processing unit (DPU), and may be implemented as a separate chip that is physically independent of other components in the processor.

The external memory device 202 may be one or more dynamic random access memories (DRAMs), such as double data rate synchronous dynamic random access memory (DDR SDRAM), low power double data rate (LPDDR) SDRAM, graphics double data rate (GDDR) SDRAM, and Rambus dynamic random access memory (PDRAM).

The host 10 may communicate with the external memory device 202 based on one of interface standards, such as DDR, LPDDR, GDDR, wide I/O, high bandwidth memory (HBM), hybrid memory code (HMC), or CXL.

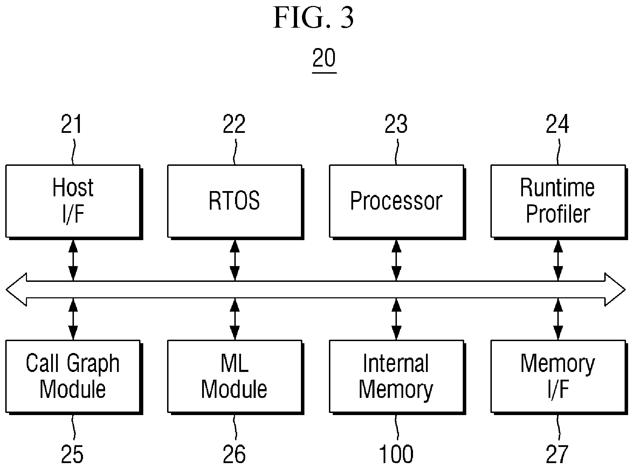

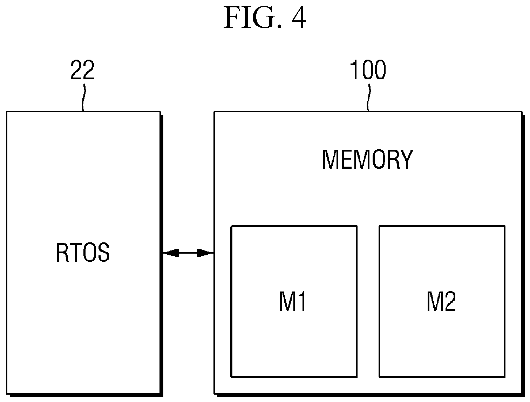

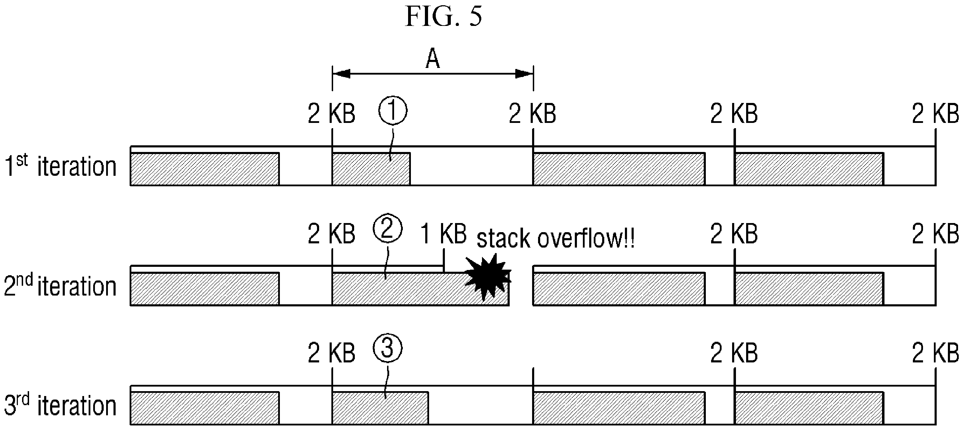

FIG. 3 is a block diagram illustrating a storage controller 20 according to some embodiments. FIG. 4 is a block diagram illustrating in more detail a memory 100 included in the storage controller 20. FIG. 5 is a diagram for describing stack overflow occurring in the memory 100.

Referring to FIG. 3, hereinafter a storage controller is referred to as a storage controller 20, but the storage controller 20 shown in FIG. 3 may be the storage controller 20-1 of FIG. 1 according to some embodiments. Alternatively, according to some embodiments, the storage controller 20 of FIG. 3 may be the memory controller 20-2 of FIG. 2.

According to some embodiments, the storage controller 20 may include a host interface 21, an RTOS module 22, a memory 100, a processor 23, a runtime profiler 24, a call graph module 25, a machine learning module 26, and a memory interface 27, and each of the components 21 to 27 and 100 may be connected to a system bus.

The storage controller 20 may communicate with a host 10 via the host interface 21. The host interface 21 may communicate based on the interface standards described with reference to FIG. 1 or 2.

The processor 23 controls the overall operation of the storage controller 20. For example, upon receiving a command from the host 10 or the host processor 11, at least one thread for executing the command, for example, a multi-thread is generated.

The RTOS module 22 may be executed by the processor 23. The RTOS module 22 may perform scheduling in order to process various threads within a predetermined time. By the RTOS module 22, threads in states such as ready, running, and blocked are scheduled and pushed to an internal memory 100. According to the number of threads defined by a designer of the electronic system, the RTOS module 22 allocates a stack used by each thread to the internal memory 100.

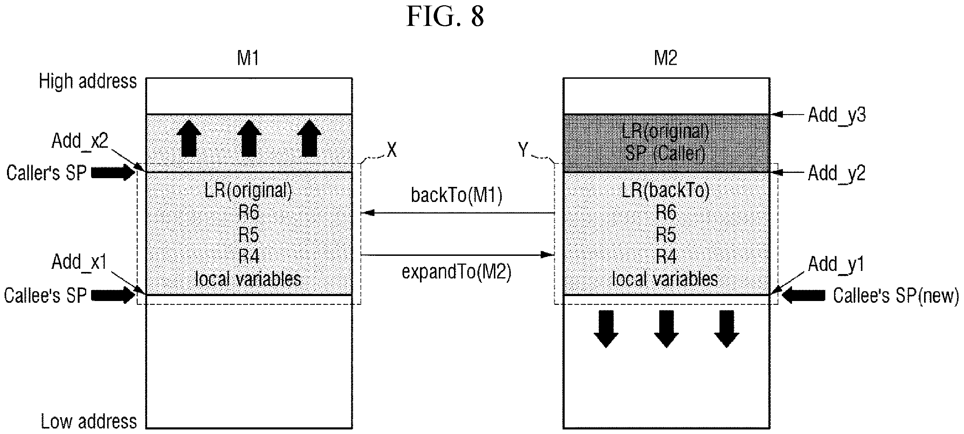

The internal memory 100 is divided into at least one memory layer according to some embodiments. For example, the internal memory 100 may include a first memory area M1 and a second memory area M2 as shown in FIG. 4. The first memory area M1 may be a memory with fast read/write performance (e.g. a read/write performance that is faster than that of the second memory area M2), and may be implemented as, for example, static RAM (SRAM). The second memory area M2 may be a memory with read/write performance slower than that of the first memory area M1, and may be implemented as, for example, DRAM. In this case, a first stack area placed in the first memory area and a second stack area placed in the second memory area may be discontinuously disposed, which will be described in detail below with reference to FIG. 8.

The internal memory 100 may be used as a buffer memory, i.e., an operating memory of the storage controller 20. According to some embodiments, the internal memory 100 may be a memory of one type, or memories of several types. For example, the internal memory 100 may be an SRAM, a DRAM, or a combination of an SRAM and a DRAM.

According to some embodiments, the RTOS module 22 allocates a stack size for each thread to the memory 100, and pushes a stack frame to the memory when processing a thread. For example, when the electronic system starts to operate, the RTOS module 22 first pushes/pops stack frames that correspond to a thread to the first memory area M1. However, since the size of the first memory area M1 is limited, the RTOS module 22 may set the stack size of the first memory area according to a threshold value so as to prevent stack overflow from occurring in the first memory area M1, and may generate an overflow alarm according to predetermined conditions. When an overflow alarm occurs while a thread is pushed to the first memory area M1, the thread is then connected to and pushed to the second memory area M2.

According to some embodiments, the current stack usage is compared with a threshold value, and when the current stack usage exceeds the threshold value, the overflow alarm may be generated. In one example, when a stack is used within a red zone in a range preset based on a threshold value, an overflow alarm may be generated. For example, when a stack signature is detected in the first memory area, an overflow alarm may be generated. For example, an overflow alarm may be generated by using call chain history information in which whether an overflow occurs is recorded by comparing a call graph, a call chain for each node, and a call probability for each node, which are obtained by the call graph module and the runtime profiler, with the threshold value. That is, the overflow alarm may be generated by comparing the current usage and the call chain history information.

The call graph module 25 performs static code analysis on threads to be processed by the RTOS module 22. The static code analysis analyzes a call graph, for example, the code constituting the thread, to identify a call chain from a root function of the thread. That is, the call graph module 25 may create a call graph including all call chains reachable from a root function of a thread, and extract the longest call chain, i.e., the maximum call chain depth.

The runtime profiler 24 performs dynamic code analysis on the call graph. For example, the runtime profiler 24 performs runtime profiling of the call graph to get a stack usage to be allocated to each thread in real time. Accordingly, the RTOS module 22 may get the stack usage based on the maximum call chain depth obtained by the call graph module, i.e., obtain the maximum stack usage.

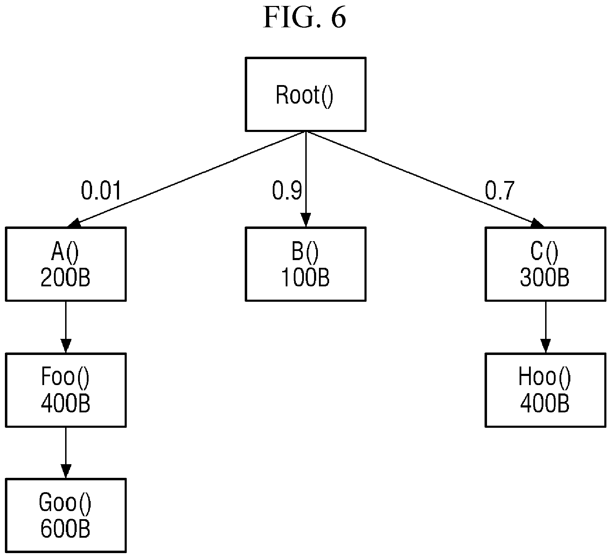

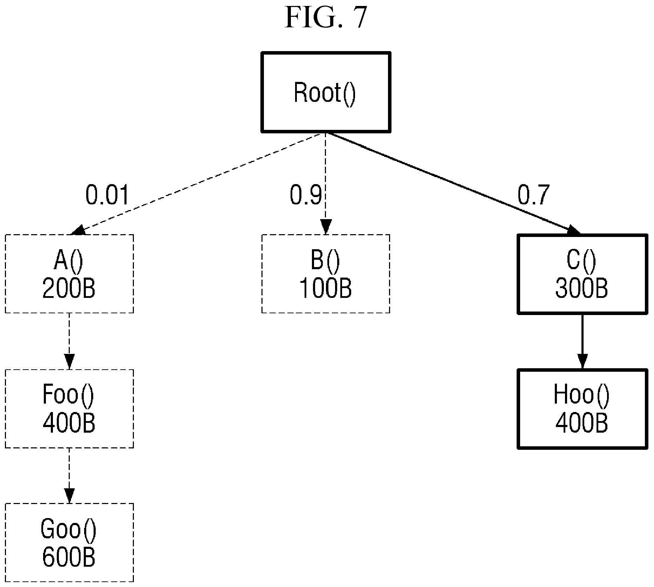

Also, the runtime profiler 24 may obtain the call probabilities for each node of the call graph while getting the stack usage of the thread-specific call function. That is, the runtime profiler 24 gets the probability that the call function is used for each call chain that starts from the root function and is connected to several nodes, and generates an augmented call graph. The augmented call graph will be described below with reference to FIGS. 6 and 7.

The machine learning module 26 may learn in advance a threshold value that prevents an overflow from occurring in a memory by taking into account the call graph generated by the call graph module 25 and the stack usage for each node and the maximum stack usage which are generated by the runtime profiler 24. According to some embodiments, the machine learning module 26 may store a threshold value that is learned in advance and obtained by taking into account various thread-specific call functions, call graphs, stack usage, stack size of the memory, and the like in a map table. Alternatively, according to some embodiments, the machine learning module 26 may be in the form of a computation module which can get an appropriate threshold value from the correlations of various thread-specific call functions, call graphs, stack usage, and the stack size of the memory. The machine learning module 26 may store a machine learning model which maps features (e.g. various thread-specific call functions, call graphs, stack usage, and the stack size of the memory) to a predicted threshold value (e.g. based on pre-learned correlations).

The machine learning module 26 may store information on a pre-learned overflow alarm, for example, overflow prediction information, according to some embodiments. For example, the machine learning module 26 may store the overflow occurrence probability with respect to the thread, the call graph, the stack usage of each node, and the call probabilities for each node in a map table.

The memory interface 27 may be an interface that is connected to the storage device 201 of FIG. 1 or the memory device 202 of FIG. 2. According to some embodiments, the memory interface 26 may be connected to the storage device 201 and may be an interface protocol, such as PCI-E, ATA, SATA, PATA, SAS, or CXL, or may be one of other interface protocols, such as USB, MMC, ESDI, or IDE. Alternatively, according to some embodiments, the memory interface 27 may be connected to the memory device 202 to communicate with the memory device 202 based on one of many interface standards, such as DDR, LPDDR, GDDR, wide I/O, HBM, HMC, or CXL.

Referring to FIG. 4, at least a portion of the internal memory 100 may be used as an operating memory of the RTOS module 22. The internal memory 100 may be divided into a plurality of memory areas. For example, the internal memory 100 may be divided into a first memory area M1 and a second memory area M2.

According to some embodiments, the first memory area M1 and the second memory area M2 may be used by dividing one memory into two areas. According to some embodiments, a plurality of memories may be respectively classified into the first memory area M1 and the second memory area M2. For example, the first memory area M1 may be a SRAM, and the second memory area M2 may be typical operating memory. In another example, the first memory area M1 may be tightly coupled memory for the RTOS module 22, and the second memory area M2 may be typical operating memory.

The first memory area M1 may access data at a faster speed than that of the second memory area M2. The RTOS module 22 may first push a thread to the first memory area M1, and then push a thread to the second memory area when a stack overflow alarm is generated in the first memory area M1.

Referring to FIG. 5, the RTOS module 22 allocates an independent stack area for each thread to the internal memory 100.

According to some embodiments, in the first iteration of thread processing, the stack usage of threads are within the stack size (2 KB, 2 KB, 2 KB, 2 KB) in all allocated areas, and thus the iteration may be performed without any problem.

According to some embodiments, in the second iteration of thread processing, when the stack usage of a call function exceeds the allocated stack size 1 KB, as shown in the second section A-②, stack overflow may occur.

According to some embodiments, in the third iteration, a stack is used within a larger allocated stack size (A-③), and thus stack overflow does not occur.

In order to prevent overflow by coping with various situations in which overflow occurs as in the examples described above, a stack size needs to be conservatively determined based on the maximum stack usage with the maximum call chain on the basis of the call graph for each thread. However, since the resource of the first memory area M1 is limited and a stack is allocated for each thread, the memory may be inefficiently used because the resource must be allocated even when the allocated area is not actually used frequently.

Thus, the RTOS module 22 should allocate a stack size for each thread to the first memory area by taking into account the appropriate stack usage rather than the maximum stack usage. Hereinafter, allocation of an appropriate stack usage according to FIGS. 6 and 7 will be described.

FIGS. 6 and 7 are call graphs of a thread according to some embodiments.

Referring to FIGS. 6 and 7, it is assumed that the RTOS module 22 divides a task given by the processor 23 into at least one thread. The call graph module 25 may get a call graph as shown in FIG. 6 by analyzing call functions of the thread.

For example, it is assumed that the thread includes a call chain divided from a root function Root() into three nodes. It is assumed that the thread is divided from a root function Root() into call function A(), call function B(), and call function C() and each call function constitutes a call chain including at least one independent call function. According to various embodiments, the call functions may intersect, link, or depend on one another, but for convenience of description, it is assumed that each call chain is independent of one another. In the illustrated example, call function A() has a call chain connected to dependent call function Foo() and dependent call function Goo(), call function B() does not have a separate dependent call function, and call function C() has a call chain connected to dependent call function Hoo().

The runtime profiler 24 gets the call probabilities for each node while getting the stack usage, i.e., memory usage, for each call function by performing runtime profiling of the call graph. In the illustrated example, the runtime profiler 24 may get the stack usage of a first node as [A, Foo, Goo]=[200 kilobytes, 400 kilobytes, 600 kilobytes], the stack usage of a second node as [B]=[100 kilobytes], and the stack usage of a third node as [C, Hoo]=[300 kilobytes, 400 kilobytes].

The runtime profiler 24 may extract a call chain with the maximum call chain depth on the basis of each call chain length of the call graph and the stack usage of each call function. In the illustrated example, the total stack usage when the first node based on call function A() is used is 200+400+600=1200 kilobytes. The total stack usage of the second node based on call function B() is 100, and the total stack usage of the third node based on call function C() is 300+400=700 kilobytes. The runtime profiler 24 may set the first node having the maximum value of 1200 kilobytes to be the maximum call chain based on the total stack usage, and determine that the maximum stack size is 1200 kilobytes.

The runtime profiler 24 may get the call probabilities for each node by predicting the frequency at which each call function is called, while profiling the call graph. Given that the total probability is 1, it is predicted that, in the illustrated example, the first node based on call function A() is called with a probability of 0.01, the second node based on call function B() is called with a probability of 0.9, and the third node based on call function C() is called with a probability of 0.7.

Referring to FIG. 7, the RTOS module 22 may set a threshold value used for expanding from the first memory area M1 to the second memory area M2 by taking into account the call probabilities for each node and the total stack usage.

For example, it is assumed that the total stack usage of the first node A is set to be a threshold value. Based on the call function for each node, the second node B or the third node C is more frequently called than the first node A. In this case, among the stack areas of the first memory area allocated to threads, a stack area corresponding to the stack usage difference (1200-100=1100) between the first node A and the second node B, i.e., a stack area of 1100 kilobytes, is allocated as space that is unused until the first node is called, and remains empty. Alternatively, a stack area corresponding to the stack usage difference (1200-700=500 kilobytes) between the first node A and the third node C, i.e., a stack area of 500 kilobytes, is allocated as space that is unused until the first node is called, and remains empty. Thus, the larger the empty space area is, the more difficult it is to allocate the stack size for other threads.

Meanwhile, in the case where the total stack usage of the second node is set to be a threshold value of the stack size by taking into account only the call probabilities for each node, when the call functions of the third node and the first node are executed, it may be more frequent that the call functions are executed by expanding from the first memory area to the second memory area by the difference between the threshold value and the stack usage. Since the second memory area may have a larger memory capacity than the first memory area, but has low processing performance, expansion to the second memory area is frequent and the overall performance of the electronic system 1 may be lowered.

Therefore, the RTOS module 22 may set the threshold value by taking into account the call probabilities for each node and the stack usage of each node, according to some embodiments, in order to provide an appropriate empty space that is allocated as a space for each thread for processing and to prevent stack overflow. For example, the stack usage of a call chain having a high call probability for each node and a high stack usage of each node may be set as a threshold value.

In the case where the total stack usage of the third node C is set as a threshold value (Th=700 kilobytes), when the second node or the third node is called, the thread may be processed without stack overflow. However, when the first node A is called, the stack size exceeding the threshold value may be expanded to the second memory area and processed. That is, when the first node A is called, the first memory area M1 is preferentially used, but the stack area exceeding the threshold value when call function Foo() of the first node is processed may be connected to the second memory area M2 to process and push the remaining stack area of call function Foo() and call function Goo().

FIG. 8 is a conceptual diagram illustrating first and second memory areas for describing an operating method of an electronic system according to some embodiments. It is assumed that a threshold value is set as 700 kilobytes which is the stack usage of the second node in the example of FIG. 7 and that the first node is called.

Referring to FIG. 8, the storage controller 20 that operates as a real-time operating system processes a stack corresponding to a thread by executing a prologue function and an epilogue function that a compiler generates in advance for each individual function at compile time. These functions push or pop the stack in a preset direction according to a preset calling convention.

It is assumed that data is stored in the first memory area M1 by executing call function A() of the first node and then call function Foo() is executed. In order to connect from the first memory area to the second memory area, a predetermined address of the second memory area is required, and the two separate areas may be connected by notifying the specified address.

The first memory area M1 in the illustrated example may store data from bottom to top, i.e., in a direction in which an address increases (low address → high address). That is, the first memory area M1 may pop the data. However, according to various embodiments, the first memory area M1 may store data in a direction in which an address decreases (high address→ low address), that is, the first memory area M1 may push the data. In the following description, a direction in which a stack grows, i.e., an address increases (pop) is described, but the present disclosure is not limited thereto.

In a context switching situation at a specific point in time, when call function Goo() is executed, a plurality of stack frames are accumulated in the first memory area M1. At this time, the threshold value, i.e., the stack size, is 700 kilobytes, so the remaining area after the stack usage (600 kilobytes=200+400) already used for call functions A() and Foo() is subtracted from the stack size is 100 kilobytes(=700-600). When only this remaining area 100 kilobytes is used, overflow may occur since the stack usage of call function Goo() exceeds the stack size (i.e., the threshold value) allocated to the first memory area (100 kilobytes of remaining area size < stack usage of 600 kilobytes of call function Goo()). In order to prevent overflow, the RTOS module 22 may expand from the first memory area M1 to the second memory area M2 when context switching takes place between threads. The RTOS module 22 may generate an overflow alarm when overflow is probable to occur.

According to some embodiments, when the overflow alarm is generated, the RTOS module 22 stores a callee's stack pointer (SP) Add_x1 used in the first memory area M1 and a link register value LR(original), and copies the stack frame X most recently stored in the first memory area M1 to the second memory area M2. In this case, it is assumed that the stack frame X most recently stored in the first memory area M1 starts from address Add_x1 and has addresses up to address Add_x2. The stack frame X may include, for example, local variables, stacks R4, R5, and R6, and the link register value LR(original), and has a stack size smaller than 600 kilobytes since the stack frame X is one of a plurality of stacks of call function Goo().

That is, the RTOS module 22 copies the callee's SP of the first memory area M1 to address Add_y1 of the second memory area M2 (callee's SP(new), and copies the stack frame X to a stack frame Y For example, the callee's SP of the first memory area M1 is copied to address Add_y1 of the second memory area M2 using expandTo function, and the local variables, stacks R4, R5, and R6, and link register value LR(original) included in the stack frame X are stored in the second memory area M2.

Since the copied stack frame Y is stored in the second memory area M2, the stacks stored in the first memory area M1 and the stacks stored in the second memory area M2 are discontinuous. In the illustrated example, the stacks at the addresses Add_x1 to Add_x2 and the stacks after the address Add_y1 are not continuous.

The second memory area M2 copies the stack frame, and changes the link register value LR(original) to a return location Add_x2 which is a separate epilogue function address (LR(backTo)) in order to later return to the first memory area when thread execution is completed. Thereafter, the RTOS module 22 executes call function Goo() up to address Add_y3, and connect an execution flow to the call point for a caller function by executing the epilogue function. That is, the original link register value LR(original) is restored by calling a backTo function while returning to a pre-stored stack pointer SP(caller) (i.e., Add_x2) of the first memory area M1. The RTOS module 22 returns the executed stack to the first memory area M1 on the basis of the restored stack pointer and link register value. That is, the RTOS module 22 performs the execution flow smoothly.

For convenience of description, the epilogue function, the backTo function, and the like are described. However, these are merely examples, and it will be apparent that these functions may be referred to differently according to various embodiments.

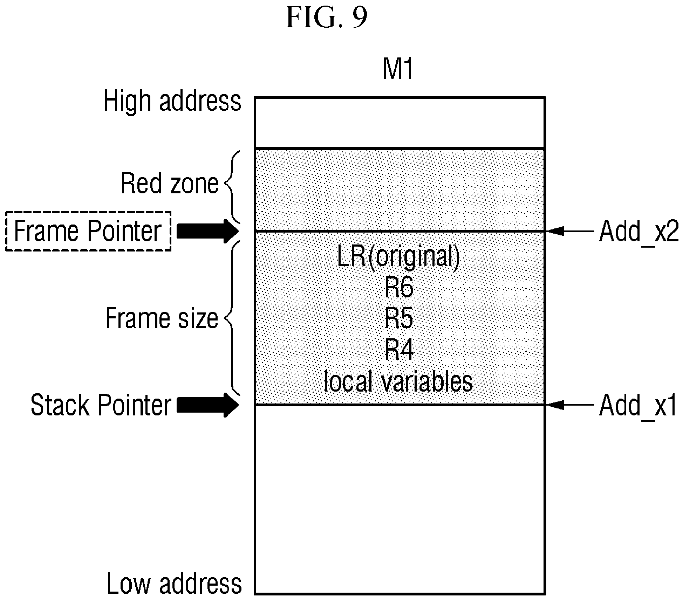

FIG. 9 is a conceptual diagram for describing the electronic system operating by expanding from the first memory area to the second memory area according to some embodiments.

Referring to FIG. 9, when a stack is used in a red zone of the first memory area M1, i.e., when stacks are stacked in one direction and filled up to the red zone, the electronic system according to some embodiments generates an overflow alarm. The red zone may refer to a memory area in a preset range based on a threshold value that is a stack size allocated for each thread to the first memory area. In the illustrated example, if the threshold value is set at a point smaller than a high address, the red zone may mean an area in an address range that is added to or subtracted from the threshold value.

According to some embodiments, the electronic system may use a frame pointer to indicate a stack usage of a call function included in a thread. In execution of a specific call function included in a thread, the RTOS module 22 may build a stack from stack pointer point Add_x1, and, when the frame point indicating the stack usage of the specific call function enters into the red zone, the RTOS module 22 may generate an overflow alarm and expand to the second memory area in accordance with FIG. 8.

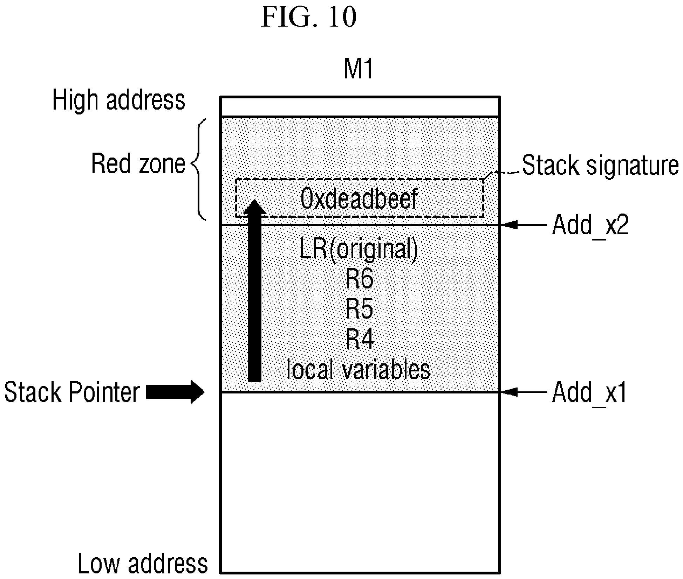

FIG. 10 is a conceptual diagram for describing the electronic system operating by expanding from the first memory area to the second memory area according to some embodiments.

Referring to FIG. 10, the electronic system may use a stack signature to compare a stack usage of a call function included in a thread with the stack size of the first memory area M1.

According to some embodiments, the stack signature may be a preset code value 0xdeadbeef as shown in FIG. 10. Alternatively, according to some embodiments, the stack signature may be a value set according to the rules specified by the RTOS module 22.

The RTOS module 22 may insert the stack signature to a preset position based on a set threshold value. In one example, the stack signature may be inserted into the red zone described with reference to FIG. 9. Alternatively, in another example, the stack signature may be inserted to a position corresponding to the threshold value.

When the RTOS module 22 detects the stack signature in the first memory area M1 while building a stack, the RTOS module 22 connects and expands an address from the first memory area M1 to the second memory area M2. As for the connection and expansion of an address, the address may be connected to the second memory area as described with reference to FIG. 8.

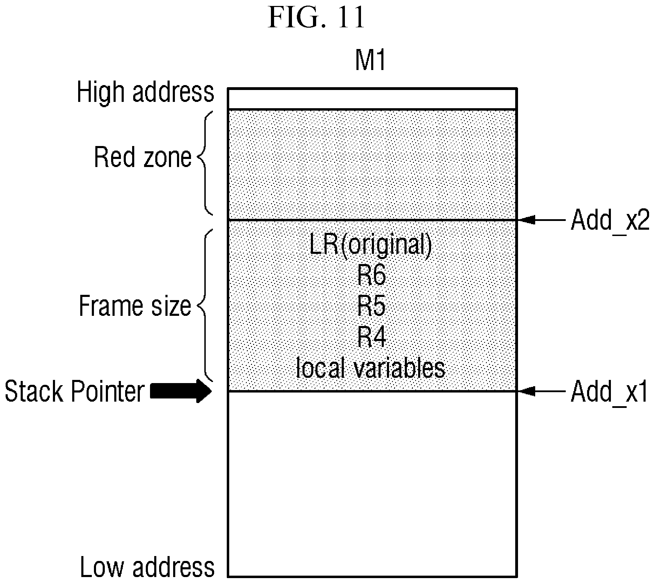

FIG. 11 is a conceptual diagram for describing the electronic system operating by expanding from the first memory area to the second memory area according to some embodiments.

Referring to FIG. 11, the electronic system may use a stack pointer and a preset expand function to compare a stack usage of a call function included in a thread with the stack size of the first memory area M1.

According to some embodiments, a designer or user of the electronic system may arbitrarily insert code that calls the expand function into a stack frame which corresponds to the thread. For example, the RTOS module 22 connects and expands an address from the first memory area M1 to the second memory area M2 by calling the preset expand function after a frame size based on a stack pointer indicating the start of the stack frame. As for the connection and expansion of an address, the address may be connected to the second memory area as described with reference to FIG. 8.

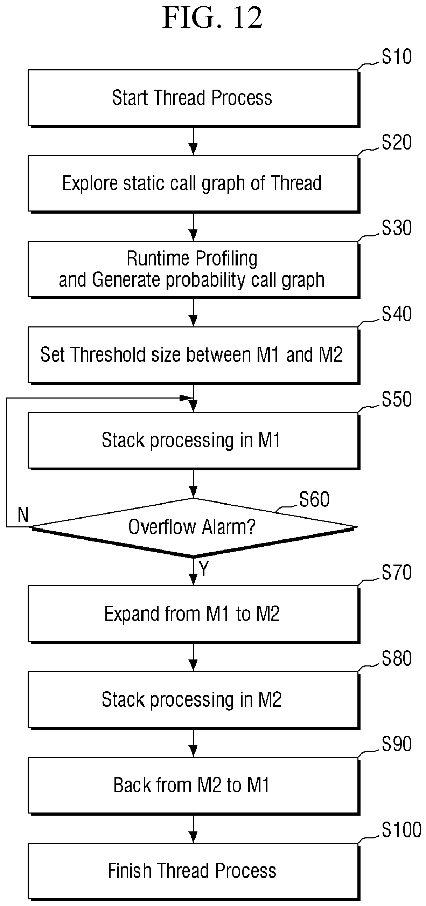

FIG. 12 is a flowchart illustrating an operating method of an electronic system according to some embodiments.

Referring to FIG. 12, an operating method of an electronic system in an RTOS, when a task is given, threads corresponding to the task are identified (S10), and a call graph is explored by performing static code analysis on each thread (S20). When the call graph is determined, the electronic system obtains a stack usage of each node by performing dynamic code analysis, i.e., runtime profiling, and obtains a call probability for each node of a call graph (S30).

The electronic system sets a threshold value that determines a stack size of a thread on the basis of the call graph, the stack usage of each node, and the call probability for each node (S40). Call functions associated with the threads are preferentially executed in a first memory area M1 (S50) until an overflow alarm is generated (S60, N). When the overflow alarm is generated (S60), the stack of the thread being executed in the first memory area M1 is connected to a second memory area M2 (S70) and subsequent stacks of the call functions are executed in the second memory area (S80).

When execution of the call function of a corresponding thread is completed in the second memory area M2, setting of an address connected for expansion returns back to the first memory area M1 (S90) and thread processing according to a call chain of the corresponding node is completed (S100).

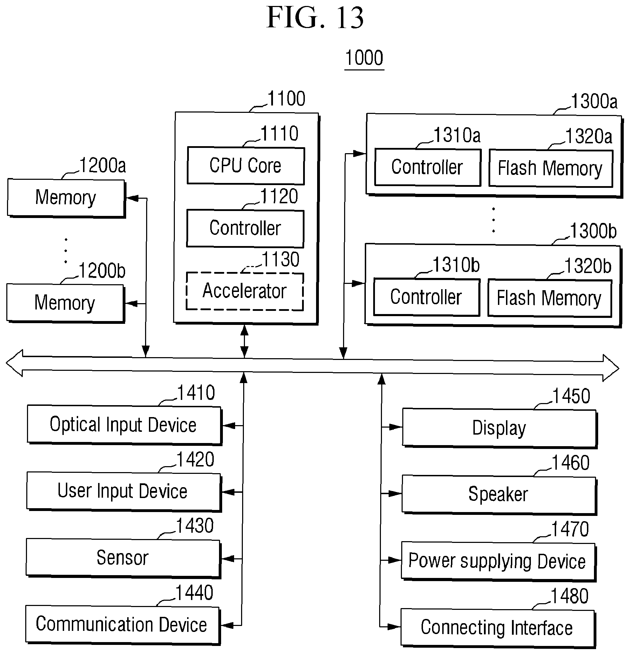

FIG. 13 is a diagram illustrating a system to which a storage device according to one embodiment is applied. A system 1000 of FIG. 13 may be, e.g., a mobile system such as a portable communication terminal (a mobile phone), a smartphone, a tablet personal computer (PC), a wearable device, a healthcare device, or an Internet of Things (IoT) device. However, the system 1000 of FIG. 13 is not limited to a mobile system and may be a PC, a laptop computer, a server, a media player, or an automotive device such as a navigation device.

Referring to FIG. 13, the system 1000 may include a main processor 1100, memories 1200a and 1200b, and storage devices 1300a and 1300b, and may further include one or more of an image capturing device 1410, a user input device 1420, a sensor 1430, a communication device 1440, a display 1450, a speaker 1460, a power supplying device 1470, and a connecting interface 1480.

According to some embodiments, the main processor 1100 and the memories 1200a and 1200b may be the host 10 and the memory device 202 of FIG. 1. Alternatively, according to some embodiments, the storage devices 1300a and 1300b may be the storage system 2 of FIG. 2.

The main processor 1100 may control an overall operation of the system 1000, e.g., control operations of the other components included in the system 1000. The main processor 1100 may be implemented as a general-purpose processor, a dedicated purpose processor, an AP, or the like.

The main processor 1100 may include one or more CPU cores 1110 and may include a controller 1120 configured to control the memories 1200a and 1200b and/or the storage devices 1300a and 1300b. According to some embodiments, the main processor 1100 may include an accelerator block 1130 that is a dedicated circuit configured to perform high speed data calculation, such as AI data calculation. The accelerator block 1130 may include a GPU, an NPU, a DPU, and/or the like, and may be implemented as a separate chip physically independent of the other components in the main processor 1100.

The memories 1200a and 1200b may be used as a main memory device of the system 1000 and may include volatile memories, such as SRAM and/or DRAM, or include NVM memories, such as flash memory, PRAM, and/or RRAM. The memories 1200a and 1200b may be implemented in the same package as the main processor 1100.

The storage devices 1300a and 1300b may function as an NVM storage device configured to store data regardless of whether power is supplied thereto, and may have a larger storage capacity than the memories 1200a and 1200b. The storage devices 1300a and 1300b may include storage controllers 1310a and 1310b and NVM storages 1320a and 1320b configured to store data under the control of the storage controllers 1310a and 1310b, respectively. The NVM storage 1320a and 1320b may include V-NAND flash memory of a two-dimensional (2D) or three-dimensional (3D) structure, or another type of NVM, such as PRAM and/or RRAM.

The storage devices 1300a and 1300b may be included in the system 1000 physically separated from the main processor 1100, or may be implemented in the same package as the main processor 1100. Also, the storage devices 1300a and 1300b may have a form such as an SSD or a memory card form to be detachably coupled to the other components in the system 1000 through an interface such as the connecting interface 1480 described below. The storage devices 1300a and 1300b may be devices to which a standard protocol, such as a UFS protocol, is applied, but are not limited thereto.

The image capturing device 1410 may capture a still image or a moving picture, and may include a camera, a camcorder, a webcam, and/or the like.

The user input device 1420 may receive various types of data from a user of the system 1000, and may include a touch pad, a keypad, a keyboard, a mouse, a microphone, and/or the like.

The sensor 1430 may sense various types of physical quantities, which may be obtained from the environment, and convert the sensed physical quantity into an electrical signal. The sensor 1430 may include a temperature sensor, a pressure sensor, an illuminance sensor, a position sensor, an acceleration sensor, a biosensor, a gyroscope, and/or the like.

The communication device 1440 may perform signal transmission and reception between the system 1000 and other devices outside the system 1000 according to various communication protocols. The communication device 1440 may be implemented using an antenna, a transceiver, a modem, and/or the like.

The display 1450 and the speaker 1460 may function as output devices configured to output visual information and auditory information to the user of the system 1000, respectively.

The power supplying device 1470 may convert power supplied from a battery (not shown) in the system 1000 and/or an external power source, and supply the converted power to each component in the system 1000.

The connecting interface 1480 may provide a connection between the system 1000 and an external device connected to the system 1000 to transmit and receive data to and from the system 1000. The connecting interface 1480 may be implemented by various interface schemes, such as an ATA interface, a SATA interface, an e-SATA interface, a small computer small interface (SCSI), SAS, a PCI interface, a PCIe interface, an NVM express (NVMe) interface, an Institute of Electrical and Electronics Engineers (IEEE) 1394 interface, a USB interface, a secure digital (SD) card interface, a multi-media card (MMC) interface, an eMMC interface, a UFS interface, an embedded UFS (eUFS) interface, and a compact flash (CF) card interface.

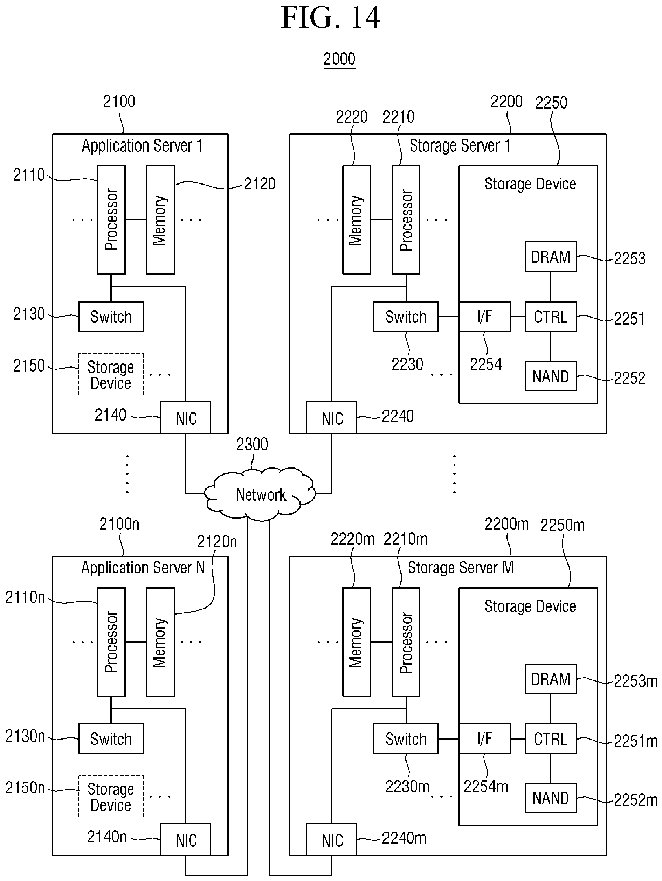

FIG. 14 is a diagram illustrating a data center to which a memory device according to some embodiments is applied.

Referring to FIG. 14, a data center 2000 is a facility that collects various data and provides services, and may also be referred to as a data storage center. The data center 2000 may be or include a system for search engines and data base operations, and may be or include a computing system used by companies, such as banks, or government agencies. The data center 2000 may include application servers 2100 to 2100n and storage servers 2200 to 2200m. The number of application servers 2100 to 2100n and the number of storage servers 2200 to 2200m may be variously selected according to an embodiment, and the number of application servers 2100 to 2100n and the number of storage servers 2200 to 2200m may be different from each other.

The application server 2100 or the storage server 2200 may include at least one of the processors 2110 and 2210 and at least one of the memories 2120 and 2220. According to some embodiments, the processors 2110 and 2210 and the memories 2120 and 2220 may be the host 10 and the memory device 202 of FIG. 1.

Taking the storage server 220 as an example, the processor 2210 may control the overall operation of the storage server 2200, and access the memory 2220 to execute commands and/or data loaded into the memory 2220. The memory 2220 may be a double data rate synchronous DRAM (DDR SDRAM), an HBM, a HMC, a dual in-line memory module (DIMM), an Optane DIMM or an NVMDIMM. According to an embodiment, the number of processors 2210 and the number of memories 2220 included in the storage server 2200 may be variously selected. In an embodiment, the processor 2210 and the memory 2220 may provide a processor-memory pair. In an embodiment, the number of processors 2210 and the number of memories 2220 may be different from each other. The processor 2210 may include a single-core processor or a multicore processor. The aforementioned description of the storage server 2200 may also be similarly applied to the application server 2100. According to an embodiment, the application server 2100 need not include the storage device 2150. The storage server 2200 may include at least one or more storage devices 2250. The number of storage devices 2250 included in the storage server 2200 may be variously selected according to an embodiment. According to some embodiments, the storage device 2250 may be the storage system 2 of FIG. 2.

The application servers 2100 to 2100n and the storage servers 2200 to 2200m may communicate with each other through a network 2300. The network 2300 may be implemented using a fiber channel (FC), an Ethernet, or the like. The FC is a medium used for relatively high-speed data transmissions, and may use an optical switch which provides high performance and/or high availability. The storage servers 2200 to 2200m may be provided as a file storage, a block storage or an object storage, depending on an access type of the network 2300.

In an embodiment, the network 2300 may be a storage-dedicated network, such as a storage area network (SAN). For example, the SAN may be an FC-SAN using an FC network and implemented according to an FC Protocol (FCP). In another example, the SAN may be an IP-SAN using a TCP/IP network and implemented according to an iSCSI (SCSI over TCP/IP or Internet SCSI) protocol. In another embodiment, the network 1300 may be a general network such as the TCP/IP network. For example, the network 1300 may be implemented according to protocols, such as FC over Ethernet (FCoE), network-attached storage (NAS), NVMe over Fabrics (NVMe-oF)

Hereinafter, the application server 2100 and the storage server 2200 will be mainly described. The description of the application server 2100 may be applied to another application server 2100n, and the description of the storage server 2200 may be applied to another storage server 2200m.

The application server 2100 may store data requested by the user or a client to be stored in one of the storage servers 2200 to 2200m through the network 2300. In addition, the application server 2100 may acquire data requested by the user or the client to be read from one of the storage servers 2200 to 2200m through the network 2300. For example, the application server 2100 may be implemented as a web server or a database management system (DBMS).

The application server 2100 may access a memory 2120n or a storage device 2150n included in another application server 2100n through the network 2300, or may access memories 2220 to 2220m or storage devices 2250 to 2250m included in the storage servers 2200 to 2200m through the network 2300. Accordingly, the application server 2100 may perform various operations on data stored in the application servers 2100 to 2100n and/or the storage servers 2200 to 2200m. For example, the application server 2100 may execute commands for moving or copying data between the application servers 2100 to 2100n and/or the storage servers 2200 to 2200m. At this time, the data may be moved to the memories 2120 to 2120n of the application servers 2100 to 2100n through the memories 2220 to 2220m of the storage servers 2200 to 2200m or directly from the storage devices 2250 to 2250m of the storage servers 2200 to 2200m. The data moving through the network 2300 may be encrypted data for security or privacy.

Taking the storage server 2200 as an example, an interface 2254 may provide a physical connection between the processor 2210 and a controller 2251 and a physical connection between an NIC 2240 and the controller 2251. For example, the interface 2254 may be implemented by a direct attached storage (DAS) method that directly connects the storage device 2250 with a dedicated cable. In addition, for example, the interface 2254 may be implemented by various interface schemes, such as an ATA interface, a SATA interface, an e-SATA interface, a SCSI, SAS, a PCI interface, a PCIe interface, an NVM express (NVMe) interface, an IEEE 1394 interface, a USB interface, an SD card interface, an MMC interface, an eMMC interface, a UFS interface, an eUFS interface, and a CF card interface.

The storage server 2200 may further include a switch 2230 and an NIC 2240. The switch 2230 may selectively connect the processor 2210 and the storage device 2250 or selectively connect the NIC 2240 and the storage device 2250 under the control of the processor 2210.

In an embodiment, the NIC 2240 may include a network interface card, a network adapter, and the like. The NIC 2240 may be connected to the network 2300 by a wired interface, a wireless interface, a Bluetooth interface, an optical interface, or the like. The NIC 2240 may include an internal memory, a DSP, a host bus interface, and the like, and may be connected to the processor 2210 and/or the switch 2230 through a host bus interface. The host bus interface may be implemented as one of the examples of the interface 2254 described above. In an embodiment, the NIC 2240 may be integrated with at least one of the processor 2210, the switch 2230, and the storage device 2250.

In the storage servers 2200 to 2200m or the application servers 2100 to 2100n, the processor may program or read data by transmitting a command to the storage devices 2130 to 2130n and 2250 to 2250m, or the memories 2120 to 2120n and 2220 to 2220m. In this case, the data may be error-corrected data through an error correction code (ECC) engine. The data is data bus inversion (DBI) or data masking (DM) processed data, and may include cyclic redundancy code (CRC) information. The data may be encrypted data for security or privacy.

The storage devices 2150 to 2150m and 2250 to 2250m may transmit a control signal and a command/address signal to the NAND flash memory devices 2252 to 2252m in response to a read command received from the processor. Accordingly, when data is read from the NAND flash memory devices 2252 to 2252m, a read enable (RE) signal is input as a data output control signal, and may serve to output the data to a DQ bus. A data strobe (DQS) may be generated using the RE signal. The command and the address signal may be latched in a page buffer according to a rising edge or a falling edge of a write enable (WE) signal.

The controller 2251 may control the overall operation of the storage device 2250. In an embodiment, the controller 2251 may include an SRAM. The controller 2251 may write the data to the NAND flash 2252 in response to a write command, or may read the data from the NAND flash 2252 in response to a read command. For example, the write command and/or the read command may be provided from the processor 2210 in the storage server 2200, the processor 2210m in another storage server 2200m, or the processors 2110 and 2110n in the application servers 2100 and 2100n. A DRAM 2253 may temporarily store (buffer) the data to be written to the NAND flash 2252 or the data read from the NAND flash 2252. In addition, the DRAM 2253 may store metadata. The metadata may be user data or data generated by the controller 2251 to manage the NAND flash 2252. The storage device 2250 may include a secure element (SE) for security or privacy.

While example embodiments of the inventive concept have been shown and described above, it will be apparent to those skilled in the art that modifications and variations in these embodiments can be made without departing from the scope of the present inventive concept as defined in the appended claims.

Further embodiments are set out in the following clauses:
1. An operating method of an electronic system in a real-time operating system, the operating method comprising:
   obtaining a call graph by performing static code analysis on at least one thread that corresponds to a task;
   obtaining a stack usage of the thread and a call probability for each node by performing runtime profiling of the call graph;
   allocating a threshold value of a stack size for a first memory area by taking into account the call graph, the call probability for each node, and the stack usage;
   expanding and storing a stack from the first memory area to a second memory area according to a comparison result between the threshold value and a stack usage of the first memory area; and
   returning the stack to the first memory when execution is completed in the second memory area,
   wherein the electronic system comprises a memory device configured to include the first memory area and the second memory area.
2. The operating method of clause 1, wherein the threshold value is set based on the call graph of the thread, the stack usage of each node, and the call probability for each node and the set threshold value has a smaller size than a maximum stack usage of the call graph.
3. The operating method of clause 1, wherein the expanding from the first memory area to the second memory area comprises:
   generating an overflow alarm in the first memory area;
   copying a stack frame most recently executed in the first memory area to the second memory area;
   executing and storing remaining stack frames of the thread in the second memory area; and
   returning a stack pointer of the second memory area back to the first memory area in response to completion of execution of the remaining stacks.
4. The operating method of clause 3, wherein the copying comprises storing a stack pointer and a link register value of the first memory area, copying the stack frame most recently executed in the first memory area to the second memory area, and changing the stored link register value to a return location of the first memory area.
5. The operating method of clause 4, wherein subsequent stacks are executed in the second memory area and the executed stacks are returned back to the first memory area based on the stored stack pointer and the changed return location.
6. The operating method of clause 1, wherein the threshold value based on the call graph, the stack usage, and the call probability for each node is learned in advance and set via machine learning.
7. An operating method of a memory device in a real-time operating system, the memory device comprising a first memory area and a second memory area, the operating method comprising:
   compiling a task into multiple threads and exploring a call graph by static code analysis on each thread;
   obtaining a stack usage of each node and a call probability for each node by performing dynamic code analysis on the explored call graph;
   setting a stack size of the first memory area based on the dynamic code analysis result;
   storing stack frames corresponding to the thread in sequence in the first memory area; and
   storing a subsequent stack frame in the second memory area in response to an overflow alarm for the first memory area being generated.
8. The operating method of clause 7, wherein a first stack of the first memory area and a second stack of the second memory area are discontinuously disposed in the memory device.
9. The operating method of clause 7, wherein the storing of the subsequent stack frame in the second memory area comprises:
   copying a stack frame most recently stored in the first memory area to the second memory area;
   storing the subsequent stack frame continuously in the second memory area; and
   in response to execution of the subsequent stack frame being terminated in the second memory area, returning the executed stack to the first memory area.
10. The operating method of clause 7, wherein the first memory area comprises a red zone in a preset range and the memory device generates the overflow alarm when the stack frame enters into the red zone.
11. The operating method of clause 7, wherein the overflow alarm is generated by comparing call chain history information with a currently executed call.
12. The operating method of clause 7, wherein the stack size of the first memory area is set based on the call graph, the stack usage of each node, and the call probability for each node, so that a stack usage with a maximum call chain depth reachable from a root function of the thread is less than or equal to a maximum stack usage.
13. The operating method of clause 12, wherein the stack size of the first memory area is learned in advance and set via machine learning.
14. The operating method of clause 7, wherein the overflow alarm is used to connect the first memory area to the second memory area by calling a preset expand function.
15. The operating method of clause 7, wherein the overflow alarm is generated when a stack signature is detected while the stack frame is being stored in the first memory area.

## Claims

1. An operating method of an electronic system in a real-time operating system, wherein the electronic system comprises a memory device configured to include a first memory area and a second memory area, the operating method comprising:
obtaining a call graph by performing static code analysis on at least one thread that corresponds to a task;
obtaining a stack usage of the thread and a call probability for each node by performing runtime profiling of the call graph;
allocating a threshold value of a stack size for the first memory area by taking into account the call graph, the call probability for each node, and the stack usage;
expanding and storing a stack from the first memory area to the second memory area according to a comparison result between the threshold value and a stack usage of the first memory area; and
returning the stack to the first memory area when execution is completed in the second memory area.

2. The operating method of claim 1, wherein the threshold value is set based on the call graph of the thread, the stack usage of each node, and the call probability for each node and the set threshold value has a smaller size than a maximum stack usage of the call graph.

3. The operating method of claim 1 or claim 2, wherein the expanding from the first memory area to the second memory area comprises:
generating an overflow alarm in the first memory area;
copying a stack frame most recently executed in the first memory area to the second memory area;
executing and storing remaining stack frames of the thread in the second memory area; and
returning a stack pointer of the second memory area back to the first memory area in response to completion of execution of the remaining stacks.

4. The operating method of claim 3, wherein the copying comprises storing a stack pointer and a link register value of the first memory area, copying the stack frame most recently executed in the first memory area to the second memory area, and changing the stored link register value to a return location of the first memory area.

5. The operating method of claim 4, wherein subsequent stacks are executed in the second memory area and the executed stacks are returned back to the first memory area based on the stored stack pointer and the changed return location.

6. The operating method of any preceding claim, wherein the threshold value based on the call graph, the stack usage, and the call probability for each node is learned in advance and set via machine learning.

7. An electronic system comprising:
a real-time operating system module configured to process a command from a host by dividing the command into at least one thread;
a call graph module configured to get a call graph by performing static code analysis on the thread;
a runtime profiler configured to get a stack usage of each node and a call probability for each node by performing runtime profiling of the call graph; and
a memory device configured to include a first memory area and a second memory area,
wherein the RTOS module is configured to:
allocate a stack space that corresponds to the thread to the first memory area on the basis of a threshold value based on the stack usage of each node and the call probability for each node,
store a stack corresponding to the thread in the allocated stack space in the first memory area, and
connect and store a subsequent stack to the second memory area, in response to an overflow alarm based on the call probability for each node and the stack usage of each node being generated.

8. The electronic system of claim 7, wherein a first stack of the first memory area and a second stack of the second memory area are discontinuously disposed in the memory device.

9. The electronic system of claim 7 or claim 8, wherein the storing of the subsequent stack in the second memory area comprises:
copying a stack frame most recently stored in the first memory area to the second memory area;
storing the subsequent stack frame continuously in the second memory area; and
in response to execution of the subsequent stack frame being terminated in the second memory area, returning the executed stack to the first memory area.

10. The electronic system of any of claims 7-9, wherein the first memory area comprises a red zone in a preset range and the real-time operating system module is configured to generate the overflow alarm in response to the stack frame entering into the red zone.

11. The electronic system of any of claims 7-10, wherein the real-time operating system module is configured to generate the overflow alarm by comparing call chain history information with a currently executed call.

12. The electronic system of any of claims 7-11, wherein the real-time operating system module is configured set the stack size of the first memory area based on the call graph, the stack usage of each node, and the call probability for each node, so that a stack usage with a maximum call chain depth reachable from a root function of the thread is less than or equal to a maximum stack usage.

13. The electronic system of claim 12, wherein the stack size of the first memory area is learned in advance and set via machine learning.

14. The electronic system of any of claims 7-13, wherein the real-time operating system module is configured to use the overflow alarm to connect the first memory area to the second memory area by calling a preset expand function.

15. The electronic system of any of claims 7-14, wherein the real-time operating system module is configured to generate the overflow alarm in response to a stack signature being detected while the stack frame is being stored in the first memory area.
